# EUROPEAN PATENT APPLICATION

(11) **EP 2 042 066 A1**
(43) Date of publication of application: **01.04.2009**
(21) Application number: 07425586.0
(22) Date of filing: 25.09.2007
(51) Int. Cl.: A47J 43/07, A47J 44/00

(54) **An electrical domestic appliance for food processing, with integrated weighing and hating funcitons**

(71) Applicant: Proprieta' Industriali S.r.l., 41100 Modena (IT)
(72) Inventor: Mordini Massimo, 41100 Modena (IT); Pricipi Stefano, 60022 Castelfidardo (IT)
(74) Representative: Gotra, Stefano

(57) **Abstract**

An electrical domestic appliance for food processing, comprising a functional support (1) and a container recipient (2) which is removably associable above the support (1) at least in an operating configuration. The appliance further comprises a scales predisposed for weighing the container recipient (2) and a heater (10) predisposed for heating contents of the container recipient (2). The heather (10) is comprised in the support (1).

## Description

The invention relates specifically, though not exclusively, to a support having weighing and heating functions for electrical kitchen appliances, as well as a kitchen appliance comprising the support.

Recent years have seen a great increase in the presence of electrical kitchen appliances, i.e. small automatic appliances which can perform many operations, mainly destined for food processing. Typically these devices are able to carry out a variety of functions (mincing, mixing, chopping and dicing, and so on) by means of a variety of different interchangeable rotary utensils internally of a container recipient.

In recent years the structure of the appliance has been added-to, with means able to perform operations that traditionally were carried out on other supports. For example, document EP 757532 describes a kitchen appliance having the above characteristics, which is further provided with means for weighing and heating the contents of the recipient, internally of which recipient the rotary utensils are located. The preparation of culinary dishes is considerably facilitated by these added functions, which are very positive in terms of time saving, as well as not necessitating transfer of food from one container to another. A further advantage is that some operations can be done simultaneously (for example mixing and heating).

The above-described appliance is, however, not free of drawbacks. In order to heat the container recipient, the appliance comprises a support for the container which houses an electrical resistance; the scales predisposed for the weighing uses force transducers on which the recipient-support assembly rests. From the described configuration it follows that the heating element is mounted on a component of the appliance which is not solidly constrained to the rest base. On the other hand, the rest base, from which the various appliance functions are controlled, must be in some way interfaced with the heating element: for this reason, a dragging electrical contact has to be realised in order to enable the relative movements between the base and the recipient support; this can be, for example, a brush contact. This contact represents a double drawback. Firstly, the presence of the brushes can cause static friction phenomena which alter the weight measurement produced by the scales. Secondly, the wear on the contact can cause appliance malfunctioning due to wear after a certain period of use. Other types of removable electric contacts exhibit similar drawbacks to those described above.

A further disadvantage relates to the presence of a supplementary element in the kitchen appliance, the heating support. This support, which has to be disengaged from the container recipient for obvious reasons of ease of use of the recipient, can easily be lost or damaged due to its small size.

The main aim of the present invention is to provide an electrical domestic appliance for processing food, having integrated functions of weighing and heating which, however, do not exhibit the described drawbacks in the

### prior art.

An advantage of the appliance of the present invention concerns the accuracy of the weight measurement performed by the scales incorporated in the rest base, which accuracy is not compromised by the presence of dragging or removable electrical contacts arranged between the rest base and the weighed components.

A further advantage of the appliance of the present invention is the reliability over time of the appliance itself, not limited by the presence of electrical contacts between the rest base and other components which contacts are subject to wear.

A further advantage of the appliance of the invention is the prevention of the possibility of losing or accidentally damaging the functional electrical elements of the appliance, which are all incorporated in a single protective shell.

Further characteristics and advantages of the present invention will better emerge from the detailed description that follows, together with the accompanying figures of the drawings, which are provided purely by way of non-limiting example, and in which:
figure 1 is a section of the appliance of the present invention in a working configuration;

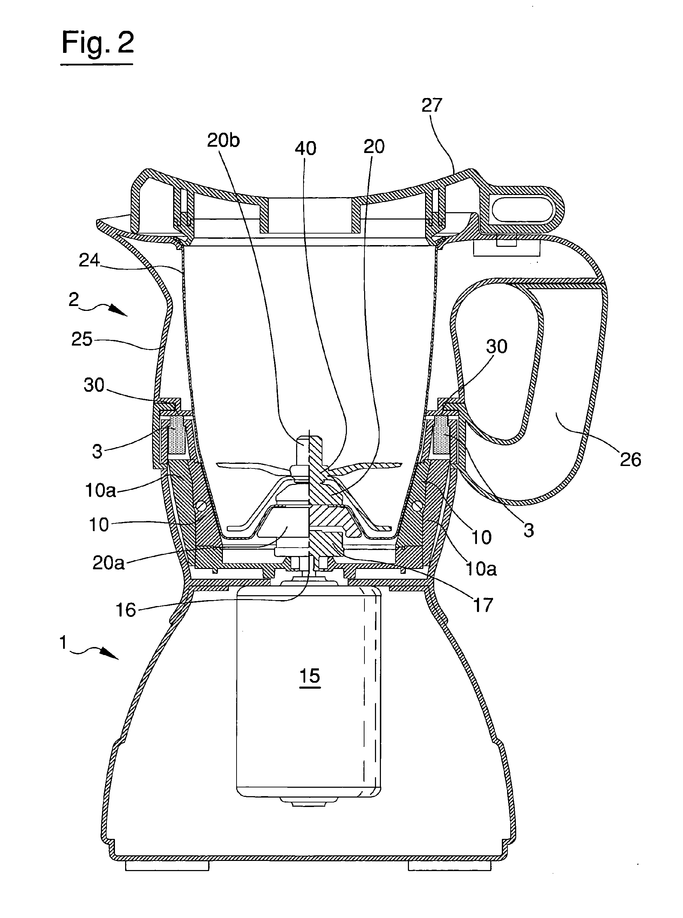

figure 2 is a section of the appliance of the present invention in a weighing configuration;

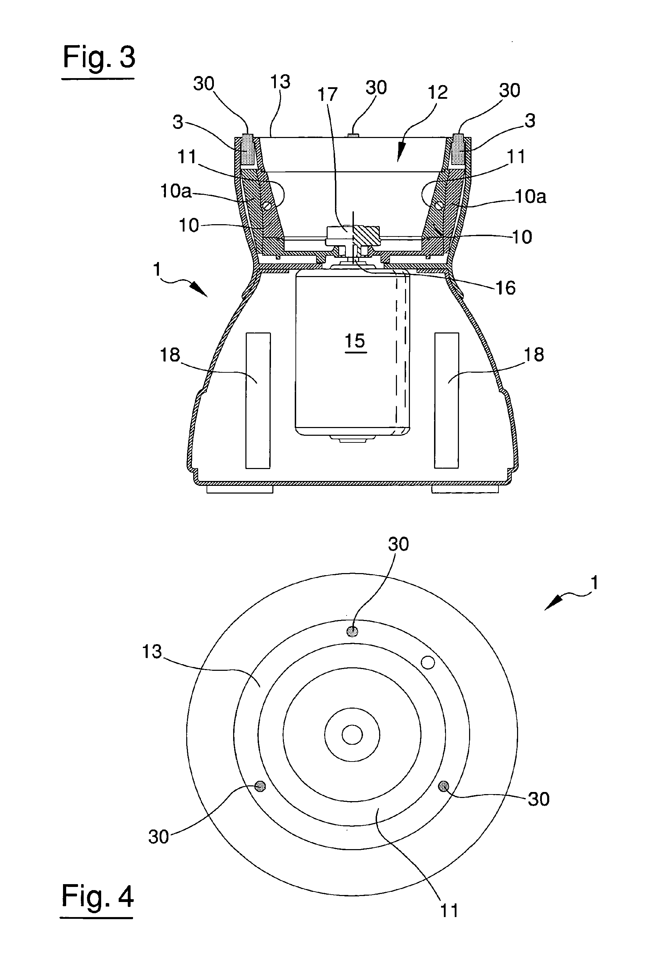

figure 3 is a section of the functional support of the appliance of the present invention;
figure 4 is a view from above of the functional support of the appliance of the present invention;

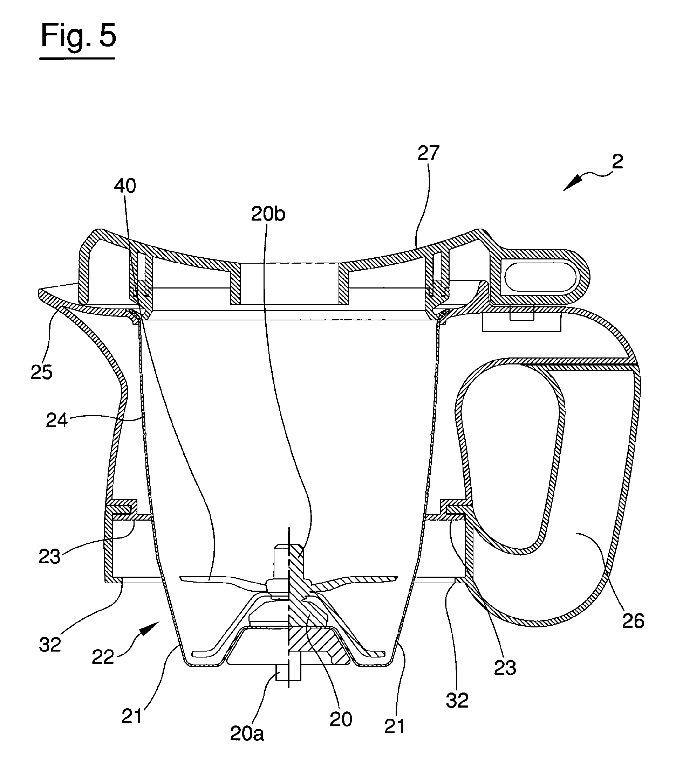

figure 5 is a section of the container recipient of the appliance of the invention.

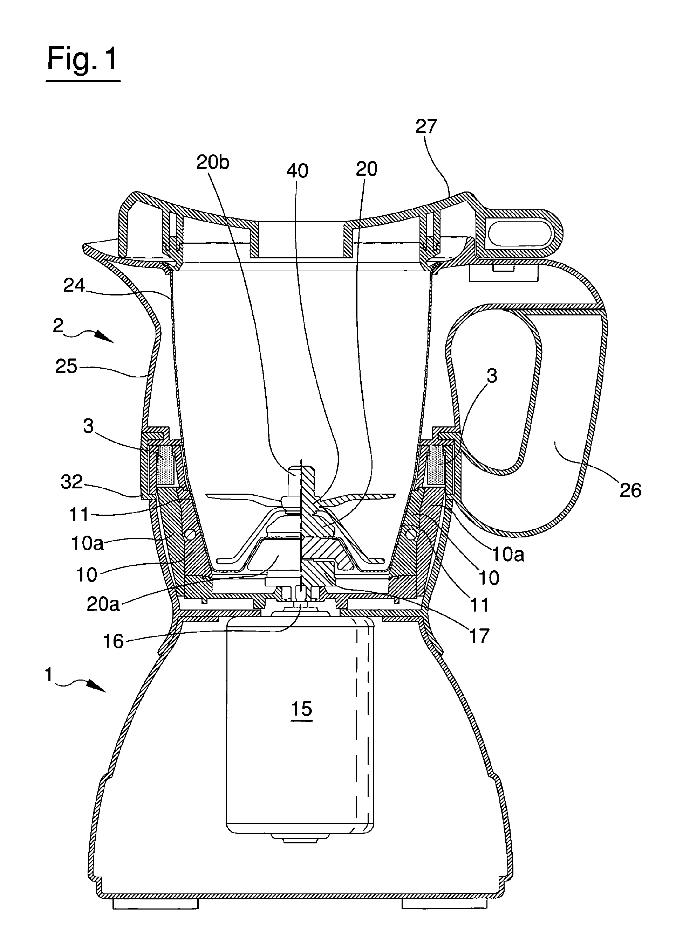

In the following description, the electrical appliance for food processing of the present invention is described with reference to its normal operating configuration, as shown in figure 1. Positional relations among elements described in terms of relative heights (for example by the use of words such as higher or lower) are to be interpreted with reference to the above configuration.

With reference to the figures of the drawings, the electrical appliance for food processing of the present invention comprises a functional support 1 and a removable container recipient 2 associable above the functional support 1 in at least an operating configuration. The appliance comprises a scales predisposed for weighing the container recipient 2 and a heater 10 predisposed to heat contents of the container recipient 2. The appliance of the invention is characterised in that the heater 10 is comprised in the functional support 1, rather than being arranged internally of an element which can be dissociated from the support. The configuration enables the main aim of the invention, as described above, to be performed, and in particular resolves the drawbacks in the prior art such as the alterations of the measurement read by the scales and the problems of wear on the appliance due to the presence of dragging electrical contacts.

The heater 10 can be constituted by an electrical resistance or by other known means. The heater 10 is advantageously associated to a insulator 10a predisposed to insulate the heater 10 with respect to the support 1. The insulation prevents excessive heating of the parts of the support 1 accessible to the user, as well as reducing loss of heat via the support 1.

To enable heat exchange between the support 1 and the container recipient 2, the support 1 exhibits a first heat exchange surface 11 predisposed to be heated by the heater 10, while the container recipient 2 exhibits a second heat exchange surface 21. The first and second heat exchange surfaces 11, 21 are at least partially in contact in the operating configuration of the appliance. The contact between the surfaces enables a heat bridge to be created between the heater 10 and the inside of the container recipient 2, internally of which elements can be arranged, generally foodstuffs, to be heated or cooked. Preferably metal materials, characterised by a high level of heat conductivity, can be associated to the heat-exchange surfaces 11, 21 to improve heat transfer through the above-cited heat bridge. The insulation 10a is associated to the heater 10 on the opposite side thereof with respect to the first heat exchange surface 11.

In the preferred embodiment the appliance of the present invention comprises means for hooking 32 for constraining the container recipient 2 to the functional support 1 in the operating configuration thereof. The means for hooking can be constituted by a bayonet connection or by any other hooking system in the prior art. The appliance can take on a weighing configuration which is alternative to the operating configuration, in which the only constraint to relative movement between the support 1 and the container recipient 2 in a vertical direction is a simple resting arrangement.

The support 1 preferably superiorly exhibits a housing seating 12 predisposed to receive a lower portion 22 of the container recipient 2. The first heat-exchanging surface 11 faces the housing seating 12, while the lower portion 22 of the container recipient 2 externally exhibits the second heat exchange surface 21 as defined above. When the appliance of the invention is brought into the operating configuration, the lower portion 22 of the container recipient 2 is placed internally of the housing seating, so that the heat exchange surfaces 11, 21 predisposed on the two assembled elements come into contact and define the above-cited heat bridge.

With the position of the heating elements and the heat exchange surfaces enabling heat to be transmitted to the food thus arranged, the arrangement of the elements enabling the appliance to perform the weighing operation is now described. The scales of the device advantageously comprise at least a force transducer 3, comprising in turn at least a mobile weighing surface 30. In order to prevent interference between the groups having different functions, in the operating configuration of the appliance the at least a weighing surface is distanced from the above-described heat exchange surfaces 11, 21. The at least a weighing surface is preferably composed of more than one weighing surface, which are distributed along a peripheral circumference of the appliance, which circumference develops about a vertical axis. The area identified by the coupling, between the housing seating 12 and the lower portion 22 arranged along the vertical axis, groups the elements having a heating function, as has been described herein above. The functional support 1 advantageously exhibits a flat upper edge surface 13 surrounding the housing seating 12; the container recipient 2 exhibits a contact surface 23, also flat and arranged in an upper peripheral position with respect to the lower portion 22. The two surfaces face one another in the operating configuration of the appliance, and are preferably coupled in direct contact. The at least a weighing surface 30 of the scales is associated at one of the two couplable surfaces, so that nearing the contact surface 23 to the flat upper edge surface 13 requires application of a force which is detectable by the at least a force transducer 3. Preferably the at least a weighing surface 30 is associated to the edge surface 13, being arranged either in relief with respect thereto or internally of at least a hollow recess afforded at at least a pivot predisposed on the contact surface 23. In a further embodiment of the invention, the at least a weighing surface 30 can be associated to the contact surface 23. In the illustrated embodiment, there are three weighing surfaces 30, circular and arranged equidistanced and projecting along the edge surface 13, which edge surface 13 is advantageously annular. The contact and edge surfaces are distanced in the weighing configuration, in which the weight of the container recipient and any contents thereof bear directly down on the at least a weighing surface 30, enabling the weight to be read off via the force transducers 3. In bringing the apparatus into the operating configuration, the contact surface 23 is brought into contact with the edge surface 13 and the at least a weighing surface 30 is pressed into a non-operating endrun position; the means for hooking 32 are then used to block the position of the container recipient 2.

The force transducers 3 used in the device can be of various types. Electronic displacement sensors are preferred, for example Hall-effect sensors, associated to elastic contact elements.

The support 1 obviously comprises at least an electronic card 18 for controlling the appliance as it controls the various functions of the device; the support 1 also exhibits manual controls and at least a screen for displaying the weight measurements performed by the scales. The electronic card 18 can control the activation of the optical and/or acoustic signals which can be predisposed to signal that a weight measurement previously-selected by the user has been reached. The support 1 further comprises a motor group, comprising a motor 15 and at least a transmission shaft 16 provided with a first engaging member 17 at one of ends thereof. In a preferred embodiment, the motor 15 can be connected, either directly or via a transmission shaft, to the first engaging member 17 by means of a belt or gear transmission. The first engaging member 17 faces the inside of the housing seating 12. The container recipient 2 comprises a transmission link 20, rotatably associated to a lower end of the lower portion 22 of the container recipient 2. The transmission link 20 comprises, at an end thereof which is external of the container recipient 2, a second engaging member 20a which is predisposed to associate with the first engaging member 17 at least in the appliance's operating configuration. The transmission link 20 further comprises a fastening element 20b arranged at the other end thereof, internally of the container recipient 2. The engagement defined by the association of the first engaging element 17 and the second engaging element 20 enables an axial translation of the engaged elements; in this way, the elements can also be associated in the weighing configuration of the appliance, without jeopardising the weighing quality. The appliance comprises at least a user utensil 40 which is rotatably associable, either removable or not according to the embodiment, to the fastening element 20b. In a preferred embodiment the appliance comprises an entire assortment of interchangeable user utensils 40, all removably associable to the fastening element 20b. The utensils 40 can be mincing blades or can have other functions; they can also be sieves, whisks or other rotating utensils used in prior-art kitchen appliances.

The container recipient 2 advantageously comprises a thin-walled beaker 24, the lower part of which defines the lower portion 22 of the cited recipient. The beaker is advantageously made of a material characterised by high heat conductivity, preferably stainless steel. The lower portion 22 of the thin-walled beaker 24 comprises a bottom wall connected by truncoconical walls to the upper part of the beaker. The housing seating 12 is counter-shaped with respect to the truncoconical walls, so that the walls are in contact with the support 1 in the operating configuration. The truncoconical walls externally define the second heat exchange surface 21. The bottom wall comprises a flat peripheral annular section and a central concave section, centrally holed to enable the housing of the transmission link 20. The beaker 24 is superiorly surrounded by a protective shell 25, which defines in a lower part thereof the contact surface 23. The protective shell 25 is preferably made of a heat-insulating material, preferably made of a plastic material. The protective shell 25 advantageously comprises a thin wall, distanced from the thin wall of the beaker 24; a hollow space exists between the two walls, in which, if need be, functional elements of the appliance can be housed, such as for example the force transducers 3. The protective shell 25 comprises a handle 26 and a lid 27 for closing the beaker 24. Further force transducers (not illustrated in the figures) can be arranged at the upper surface of the lid 27. The further force transducers enable weight measurements to be made during the operation of the appliance, enabling, for example, a batching of the ingredients to be added to the inside of the container recipient 2 during a cooking operation.

## Claims

1. An electrical domestic appliance for food processing, comprising a functional support (1) and a container recipient (2) which is removably associable above the support (1) at least in an operating configuration; further comprising a scales predisposed for weighing the container recipient (2) and a heater (10) predisposed for heating contents of the container recipient (2); **characterised in that** the heater (10) is comprised in the support (1).

2. The electrical domestic appliance of claim 1, **characterised in that** the support (1) exhibits a first heat exchange surface (11) predisposed to be heated by the heater (10) and the container recipient (2) exhibits a second heat exchange surface (21), the first and second heat exchange surfaces (11, 21) being at least partially in contact in the operating configuration of the appliance.

3. The electrical domestic appliance of claim 2, **characterised in that** the scales comprise at least a force transducer (3) comprising at least a mobile weighing surface (30), the at least a mobile weighing surface (30) being distanced from the heat exchange surfaces (11, 21) in the operating configuration of the appliance.

4. The electrical domestic appliance of claim 2 or 3, **characterised in that** the support (1) superiorly exhibits a housing seating (12) predisposed to receive a lower portion (22) of the container recipient (2), the first heat exchange surface (11) facing onto the housing seating (12), the lower portion (22) of the container recipient (2) exhibiting the second heat exchange surface (21).

5. The electrical domestic appliance of claim 4, **characterised in that** the support (1) exhibits a flat upper edge surface (13) surrounding the housing seating (12), the container recipient (2) exhibiting a flat contact surface (23) arranged in an upper peripheral position with respect to the lower portion (22), the flat upper edge surface (13) and the contact surface (23) facing one another in the operating configuration of the appliance, the at least a mobile weighing surface (30) being associated to the flat upper edge surface (13) in such a way that nearing the contact surface (23) to the flat upper edge surface (13) requires application of the force which can be detected by the at least a force transducer (3).

6. The electrical domestic appliance of claim 4 or 5, **characterised in that** the support (1) comprises a motor group comprising a motor (15) and at least a transmission shaft (16) provided with a first engaging member (17) located at an end of the transmission shaft (16), the first engaging member (17) facing towards inside the housing seating (12).

7. The electrical domestic appliance of claim 6, **characterised in that** the container recipient (2) comprises a transmission link (20), rotatably associated to a lower end of the lower portion (22) of the container recipient (2); the transmission link (22) comprising, at an end thereof which is external of the container recipient (2), a second engaging member (20a) which is predisposed to associate to the first engaging member (17) at least in the operating configuration of the appliance, the transmission link (20) further comprising a fastening element (20b) arranged at another end of the element internally of the housing container (2).

8. The electrical domestic appliance of claim 7, **characterised in that** the engagement defined by the association of the first engaging member (17) and the second engaging member (20a) enables an axial translation of the engaged elements.

9. The electrical domestic appliance of claim 8, **characterised in that** it comprises at least a user utensil (40) which is rotatably associable to the fastening element (20b).

10. The electrical domestic appliance of one of the preceding claims, **characterised in that** it comprises means for hooking (32) for constraining the container recipient (2) to the support (1) in the operating configuration of the appliance; the appliance being able to assume a weighing configuration, which is alternative to the operating configuration, in which an only constraint to relative movement in a vertical direction between the support (1) and the container recipient (2) is a simple resting constraint.
